# EUROPEAN PATENT APPLICATION

(11) **EP 1 450 550 A1**
(43) Date of publication of application: **25.08.2004**
(21) Application number: 04250783.0
(22) Date of filing: 13.02.2004
(51) Int. Cl.: H04N 1/21

(54) **Electronic camera**

(30) Priority: 17.02.2003 JP 2003037833
(71) Applicant: KONICA MINOLTA HOLDINGS, INC., Tokyo 100-0005 (JP)
(72) Inventor: Hayashi, Shuji, Hachioji-shi, Tokyo (JP)
(74) Representative: Rees, Alexander Ellison

(57) **Abstract**

An electronic camera enabling printing of a higher-quality composite image, in which a digital still camera modifies imaging conditions so as to match a frame image selected by a user before imaging, thereby achieving a higher-quality composite image.

## Description

### BACKGROUND OF THE INVENTION

### Field of the Invention

The present invention relates to an electronic camera, and more particularly to an electronic camera capable of obtaining image information by which a high-grade image can be printed.

### Description of the Prior Arts

With improvement of electronic technologies, there has been developed an electronic camera that converts a picked-up (or photographed) image to digital image information and stores it, and that kind of camera is already available commercially. A user can display an image picked up with an electronic camera, for example, on a display of his or her personal.computer and can print the image via a printer. Accordingly, the electronic camera is of wide application.

On the other hand, image information has an advantage of being relatively easy to combine by using image processing software or the like. For example, by replacing an unnecessary background with a frame and printing the composite image, the main object is trimmed with the frame and higher-grade print is obtained. The object image, however, based on the image information obtained by the image pickup does not always match the frame. If so, an object image can be more matched with the frame by means of image processing such as trimming, brightness correction, and tone correction for the image information corresponding to the object image in post-processing. There is, however, a problem that the image processing in the post-processing takes a lot of trouble and a user inexperienced in image processing software cannot conduct the image processing to his or her satisfaction.

For this problem, Japanese Unexamined Patent Publication (Kokai) No. 2001-169174 discloses a technology of displaying a frame image on a monitor and an object image overlapping the frame image during image pickup, by which a user can view a pseudo printed composite image, and in which coordinates of a frame window (a portion where the object image is contained) is recorded with being associated with image information so as to be'utilized for the image processing as the post processing.

According to the technology of Japanese Unexamined Patent Publication (Kokai) No. 2001-169174, however, imaging conditions during the image pickup are the same as those during normal photographing. Therefore, for example, if a background is bright, the main object imaged is relatively dark in many cases, and accordingly the tone differences of the main object image are decreased. If so, it is possible to brighten the object image by means of image processing as post-processing, but it cannot improve the tone differences and thereby results in a poor contrast image.

### SUMMARY OF THE INVENTION

The present invention has been made in view of the above problem of the conventional technology. Therefore, it is an object of the present invention to provide an electronic camera capable of obtaining composite image printing of higher quality.

According to a first aspect of the present invention, there is provided an electronic camera, comprising: an imaging unit for converting an optical image to image information and obtaining it, a storing unit for storing information on a frame image for printing, and imaging condition modification means for modifying imaging conditions in the imaging unit on the basis of the information on the frame image stored in the storing unit. Therefore, for example, if it is clear that a user combines the picked-up image of the main object with the frame image before printing at the time of imaging, the imaging condition modification means modifies the imaging conditions so as to match the frame image before performing the imaging, thereby achieving a higher grade composite image.

Furthermore, preferably the modification of the imaging conditions includes at least one of a modification of a photometric condition setting, a modification of a photometric area setting, a modification of a setting of adjusted exposure amount, a modification of a camera sensitivity setting, a modification of an exposure condition setting, a change of whether to emit a flash light, a modification of a ranging area setting, a modification of a focus detection frequency setting, a change of whether to use an image stabilizer, a modification of a scene mode setting, a modification of a field angle setting, and a modification of an image magnification setting.

Still further, preferably the storing unit stores information of a plurality of frame images and has selection means for a selection of the information on the plurality of frame images previous to the imaging, since a user can select a desired frame image for the composition.

Furthermore, preferably the electronic camera has displaying means for displaying the information on the frame images, since the user can check the frame images previous to the imaging.

According to a second aspect of the present invention, there is provided an electronic camera, comprising: an imaging unit for converting an optical image to image information and obtaining it, a storing unit for storing information on a frame image for printing, image processing means for performing image processing of image information, and processing condition modification means for modifying processing conditions of the image information obtained by the imaging unit on the basis of the information on the frame image stored in the storing unit. Therefore, for example, if it is clear that a user combines the picked-up image of the main object with the frame image before printing at the time of imaging, the processing condition modification means modifies the processing conditions of the image processing so as to . match the frame image for the image information obtained by the imaging before performing the image processing, thereby achieving a composite image of higher grade.

Furthermore, preferably the modification of the processing conditions includes at least one of a modification of a setting of an adjusted exposure amount, a modification of a post photometric area setting, a modification of a post auto white balance area setting, a modification of a post colorimetric area setting, a modification of a gray level correction condition setting, a modification of an edge enhancement condition setting, and a modification of a data compression ratio setting.

### BRIEF DESCRIPTION OF THE DRAWINGS

Fig. 1A is a front perspective view of an outline showing an embodiment of a digital still camera as an example of a camera to which the present invention is applied, and Fig. 1B is a rear perspective view thereof;
Fig. 2 is a block diagram showing a functional configuration of the digital still camera;
Fig. 3 is a flowchart explaining processing executed by the digital still camera according to this embodiment;
Fig. 4 is a diagram showing sample displays of an image display unit;
Fig. 5 is a diagram showing sample printing of a composite image; and
Fig. 6 is a flowchart explaining processing executed by a digital still camera according to another embodiment.

### DETAILED DESCRIPTION OF THE PREFERRED EMBODIMENTS

The preferred embodiments of a camera according to the present invention will now be described in detail hereinafter with reference to the accompanying drawings.

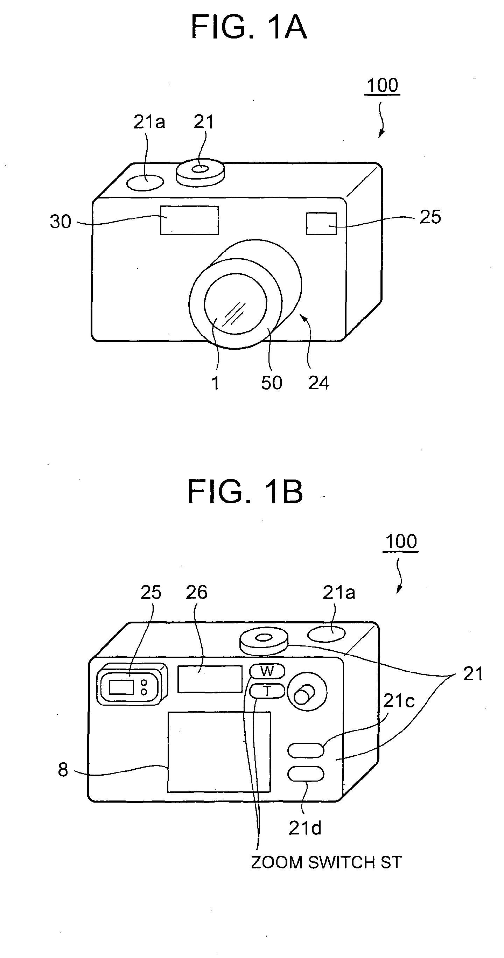

Fig. 1A is a front perspective view of an outline showing an embodiment of a digital still camera 100 as an example of an electronic camera to which the present invention is applied, and Fig. 1B is a rear perspective view thereof.

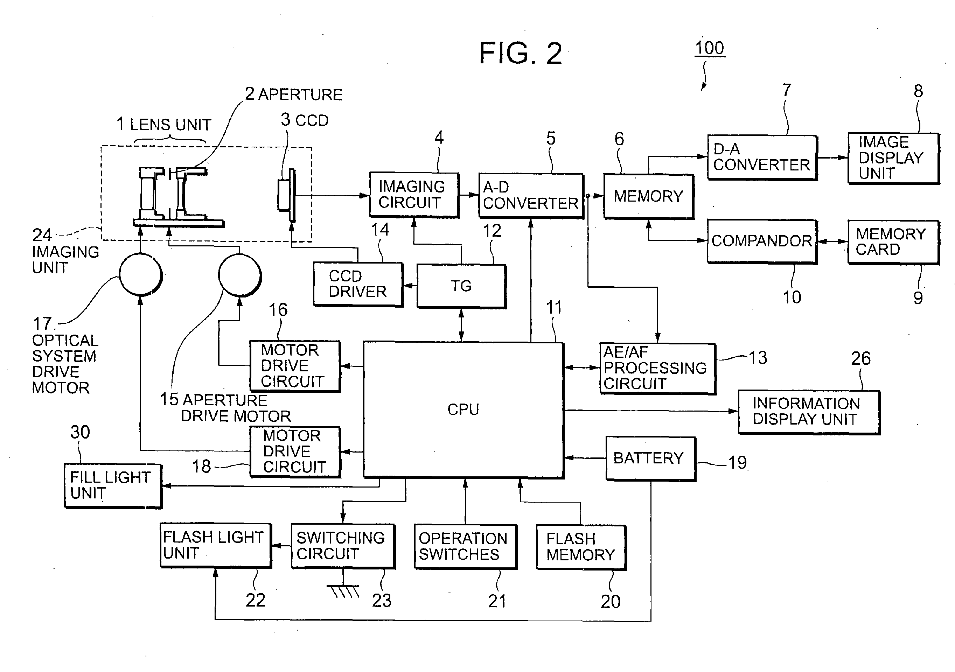

Referring to Fig. 1A, the digital still camera 100 has an imaging unit 24 for imaging an object, a fill light unit 30 for emitting a' fill light toward the object, and an optical finder 25 enabling a photographer to check a picture composition including the object by looking into it, at the front of the digital still camera. At the rear thereof, it has an image display unit 8 for displaying a photographed image, an information display unit 26 for displaying a photographing setting status (so-called a status LCD), and operation switches 21 for controlling settings or switching of various functions including a NEXT button 21c and a decision button 21d as selection means. Furthermore, the digital still camera 100 has a release switch 21a for a shutter release on the top face. The respective components will be described later in detail with a functional configuration. A flash light unit is of a pop-up type and therefore it is not shown here. At the bottom of the digital still camera 100, there is provided a memory slot for use in mounting a memory card 9 (see Fig. 2) as a storing unit, though it is not shown in Figs. 1A and 1B.

Referring to Fig. 2, there is shown a block diagram of a functional configuration of the digital still camera 100. In Fig. 2, the digital still camera 100 comprises an imaging unit 24 including a lens unit 1, which is a photographing optical system, an aperture 2, and a charge coupled device (CCD) 3, an imaging circuit 4, an A-D converter 5, a memory 6, a D-A converter 7, an image display unit 8 as a displaying means, a compandor _{'}10, a central processing unit (CPU) 11, a timing generator (TG) 12, an auto-exposure/auto-focus (AE/AF) processing circuit 13, a CCD driver 14, an aperture drive motor 15, an aperture drive motor drive circuit 16, an optical system drive motor 17, an optical system drive motor drive circuit 18, a battery 19, a flash memory 20 as a nonvolatile memory unit, operation switches 21 including a zoom switch ST, a flash light unit 22, a fill light unit 30 (which serves as an AF fill light unit or a red-eye-reduction lamp), a switching circuit 23, and an information display unit 26.

The imaging unit 24 comprises the lens unit 1 for capturing an optical image of an object described later, the aperture 2 for adjusting a light volume of a luminous flux transmitted by the lens unit 1 and controlling an exposure, and the CCD 3 for photoelectrically transferring an optical image of the object focused on an optical path of the lens unit 1, and it outputs a photoelectrically converted image signal (an analog signal) to the imaging circuit 4.

The imaging circuit 4 generates a predetermined image signal by performing various image processes such as sensitivity correction of the image signal input from the CCD 3 in synchronization with a timing signal input from the TG 12 and outputs the image signal to the A-D converter 5. The A-D converter 5 converts the input image signal from the analog signal to a digital signal and outputs image information to the memory 6 or the AE/AF processing circuit 13 according to an instruction of the CPU 11.

The memory 6 comprises a buffer memory and temporarily stores the input image signal. Upon receiving an image display instruction from the CPU 11, the memory 6 outputs image information under the image display instruction to the D-A converter 7. The D-A converter 7 converts the input image information to analog data and outputs it to the image display unit 8 after processing the data so as to adapt to the output display. On the other hand, upon receiving an image storing instruction from the CPU 11 when predetermined conditions described later are met, the memory 6 outputs image information (for example, in the JPEG format) under the image storing instruction to the compandor 10. The compandor 10 then outputs the input image information to the memory card 9.

The image display unit (also referred to as a display unit) 8 comprises a thin film transistor (TFT) and displays an image signal input from the D-A converter 7. A content to be displayed is not always an image, but it can be, for example, a text such as a menu for selecting functions.

The memory card 9 is a memory comprising a semiconductor memory and capable of storing data only once, and it is a storage medium having image information storage area for storing image information input from the compandor 10. It is assumed that the memory card 9 previously stores unique ID information inside and has the ID information printed or stamped on its surface.

Upon receiving an image readout instruction from the CPU 11, the memory card 9 outputs image information under the readout instruction to the compandor 10. The compandor 10 then expands the input image information and outputs it to the memory 6.

The compandor 10 comprises a compressor for compressing image information input from the memory 6 in a predetermined coding system and an expander for decoding and expanding image information input from the memory card 9 for displaying the image information under the readout instruction. In other words, the compandor 10 has a function of a compressing means.

The CPU 11, which is an image processing means, an imaging condition modification means, and a processing condition modification means, reads out various application programs related to photographing stored in the flash memory 20 to a work area, which is not shown, executes various processes including photographing based on a program concerned, and displays a result of the processing on the image display unit 8 or the information display unit 26.

The CPU 11 drives and controls the AE/AF processing circuit 13 in response to half-pressing of the release switch 21a (shown in Figs. 1A and 1B), determines an exposure condition from an obtained photometric value, drives the lens unit 1 to a focal position detected by an AF process, and executes an exposure process in response to full-pressing of the release switch 21a. It then performs. image processing and digital conversion for the generated image signal and temporarily stores it in the memory 6. Thereafter, it compresses the image information by means of the compandor 10 according to predetermined conditions and outputs it to the memory card 9. The CPU 11 functions as a storing unit for storing the image information obtained by the imaging unit into a storage medium, a readout unit for reading the ID information, and a storage control unit for storing the ID information into the nonvolatile memory unit when storing the image information into the storage medium.

The TG 12 generates a predetermined timing signal and outputs it to the imaging circuit 4, the CPU 11, and the CCD driver 14.

The AE/AF processing circuit 13 comprises an AE processing circuit for executing an AE process for detecting an appropriate exposure condition and an AF processing circuit for executing an AF process for detecting a focal position. The respective processes are executed for image information input from the A-D converter 5 according to an instruction of the CPU 11.

In the AE process, the AE processing circuit makes an arithmetic operation such as a cumulative addition for a luminance value of a single input screen or of a predetermined area within the screen. Based on a result of the process, it calculates an appropriate exposure condition at an actual exposure and outputs it to the CPU 11. On the other hand, in the AF process, the AF processing circuit calculates an AF evaluation value of the single input screen or of a predetermined area within the screen and outputs a result of the calculation to the CPU 11.

The AF evaluation value has a characteristic of increasing as the camera comes to a focus. In a graph generated with the lens position as an axis of abscissas and the AF evaluation value as an axis of ordinate, a mountain is formed with a peak of a focal point. In other words, the peak of the mountain or the focal point can be obtained by comparing AF evaluation values with each other obtained while moving the lens unit 1. This operation of obtaining the AF evaluation value is referred to as a look-up operation. The AF evaluation value is calculated by analyzing frequencies of image information of a single input screen or of a predetermined area within the screen. In the frequency analysis, a bandpass filter is formed in software to calculate an integral value of intensities of image signals having passed through the bandpass filter, and then a result of the calculation is considered an AF evaluation value. In other words, the AF evaluation value is contrast (a difference between light and dark) information and is calculated by an arithmetic operation for obtaining intensities of specific frequencies included in the image.

The following describes the AF process with the CPU 11 and the AF processing circuit. The CPU 11 drives and controls the optical system drive motor drive circuit 18 as the driving means, to move a second lens group of the lens unit 1 and generates image signals from the CCD 3 gradually in respective lens positions while moving the second lens group. The AE/AF processing circuit 13 calculates an AF evaluation value for each image information input from the A-D converter 5, detects a lens position corresponding to the maximum AF evaluation value as a focal point by comparing the AF evaluation values with each other, and outputs it to the CPU 11.

Upon receiving an instruction from the CPU 11, the CCD driver 14 drives and controls the CCD 3 in . synchronization with timing signals input from the TG 12. Specifically, it controls an electric charge storage time of the CCD 3 according to an exposure adjustment control.

The aperture drive motor drive circuit 16 controls a drive of the aperture drive motor according to an instruction of the CPU 11 and the aperture drive motor 15 drives the aperture 2. The optical system drive motor drive circuit 18 controls a drive of the optical system drive motor 17 according to an instruction of the CPU 11 and a driving force of the optical system drive motor 17 drives the lens unit 1, by which the lens unit 1 moves to a predetermined position.

The battery 19 is a power source for supplying a power to the respective components of the digital still camera 100 . For example, a lithium battery or an alkaline battery is used.

The flash memory (an electrically erasable programmable read-only memory (EEPROM) is also applicable) 20 stores various application programs and processing programs related to imaging of the digital still camera 100 and further it is capable of storing the information described later.

The operation switches 21 includes various kinds of operation switches such as mode switches for switching functions such as the release switch 21a, the NEXT button 21c, and the decision button 21d and a menu switch for selecting settings. An operation of each switch causes a signal to be generated and to be output to the CPU 11. The release switch 21a is a two-stage switch comprising a half-press release switch for starting the AE/AF process prior to the photographing operation and a full-press release switch for starting an actual exposure process. ,

The flash light unit 22 is provided to emit a strobe light toward an object in case of insufficient luminance of an ambient environment detected at photographing. The switching circuit 23 controls the light emission timing, the amount of emitted light, and the like.

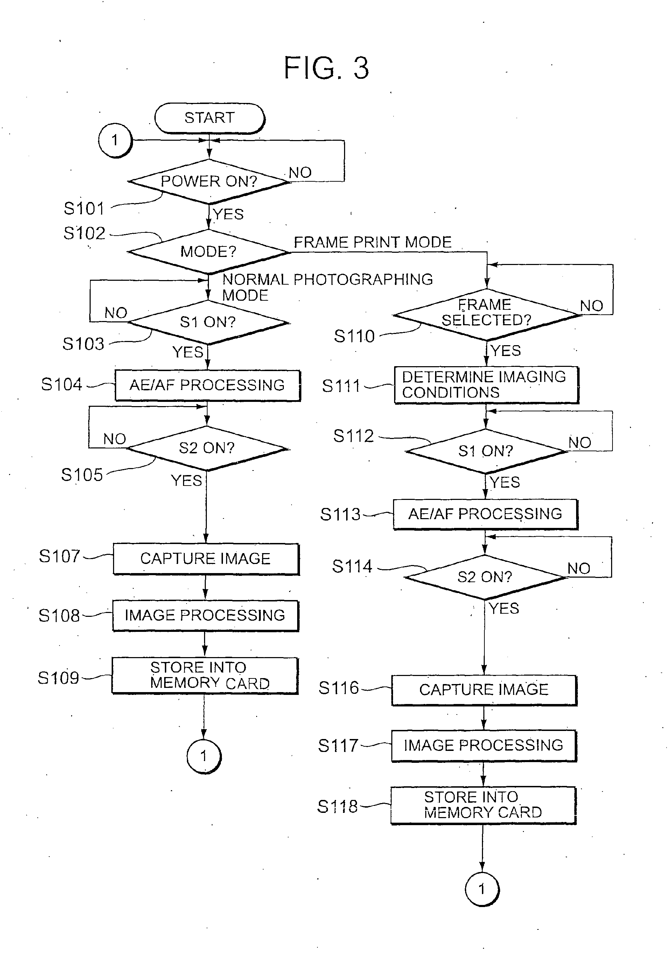

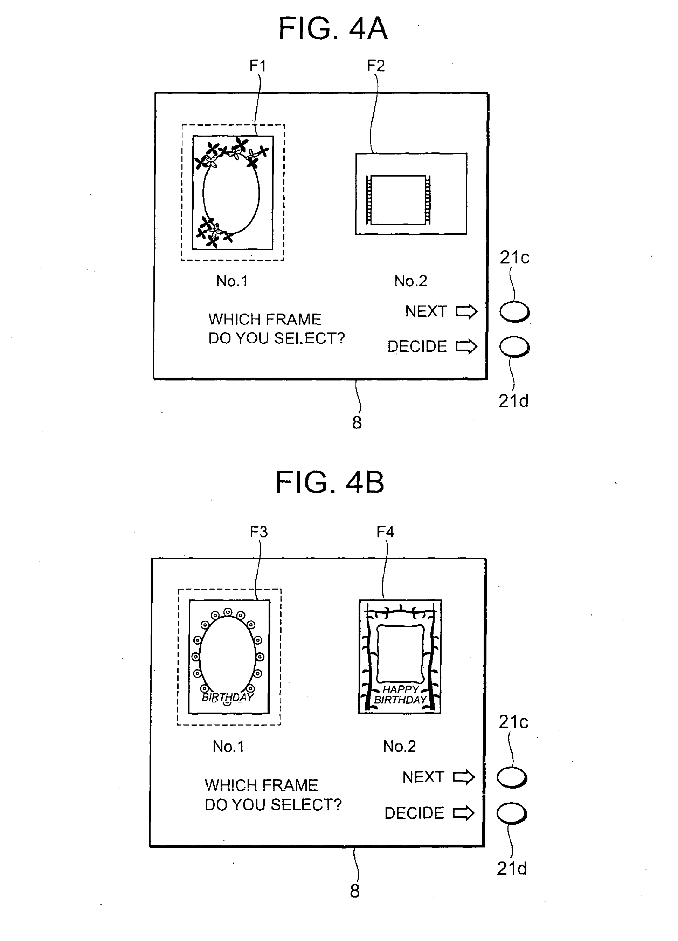

Operations of the digital still camera 100 according to this embodiment will be described below with reference to the accompanying drawings. Referring to Fig. 3, there is shown a flowchart of controlling the operations of the digital still camera 100. Referring to Figs. 4A and 4B, there are shown sample displays of the image display unit 8 of the digital still camera 100.

First, if a power switch (not shown) is set on in step S101 in Fig. 3, the CPU 11 determines a mode in step S102. In other words, if the CPU 11 determines that a normal photographing mode is set according to a user's operation of a mode setting button (not shown) among the operation switches 21, it awaits an input of a depression signal (S1 signal) of the release switch 21a in a first stage in step S103. If the CPU 11 determines in this condition that the depression signal (S1 signal) of the release switch 21a in the first stage has been input, it determines an exposure condition by performing the AE process in step S104 and drives the lens unit 1 to the focal position by performing the AF process, and further awaits an input of a depression signal (S2 signal) of the release switch 21a in a second stage in step S105. If the CPU 11 determines that the depression signal (S2 signal) of the release switch 21a in the second stage has been input, it captures the image signal via the CCD 3 in step S107, performs normal image processing in step S108 to obtain image information, and stores the image information into the memory card 9 on the basis of it in step S109. Thereafter, the flow control returns to step S101.

On the other hand, if the CPU 11 determines that a frame print mode is set according to a user's operation of the mode setting button (not shown) in step S102, it awaits a user's selection of a frame in step S110. More specifically, the CPU 11 accesses the memory card 9, first, reads out information on frame images previously stored therein (including information on areas to be combined with an object image (coordinates, etc.), while design information can also be included), and displays two (one or three or more is possible) frame images F1 and F2 and a display prompting a user's selection on the image display unit 8 as shown in Fig. 4A. In this condition, a frame is displayed around the frame image F1, which is earlier in the order of the two images to indicate that the frame image F1 is a candidate for the selection.

If the user does not desire to combine the frame image F1 with the image of the object to be photographed then, depressing the NEXT button 21c causes the CPU 11 to move the frame to around the next frame image F2, thereby indicating that the frame image F2 is a candidate for the selection. If the user does not desire to combine the frame image F2 with the image of the object to be photographed then, further depressing the NEXT button 21c causes the CPU 11 to switch the screen of the image display unit 8 so as to display other frame images F3 and F4. Thereafter, a candidate for the frame image selection can be displayed in the same procedure.

If a frame image F3, which is a candidate for the selection, is selected as an image to be combined with the image of the object to be photographed then as shown in Fig. 4B, directly depressing the decision button 21d causes the CPU 11 to determine that the frame image F3 is selected. Thereafter, in step S111, the CPU 11 determines imaging conditions on the basis of the selected frame image. More specifically, the CPU 11 reads information on the frame image F3 stored in the memory card 9 and determines the conditions as described below (modifies default settings of the imaging conditions). Instead of using all of the following conditions, a single condition or combined conditions can be used.
(1) A spot photometric system is adopted as a photometric system. A photometry is performed mainly for a range where the main object to be combined with the frame image is supposed to exist (a central portion in the case'of the frame image F3) and an exposure is adjusted to the portion, thereby achieving an appropriate exposure of the main object.
(2) The photometric area is limited to the range where the main object to be combined with the frame image is supposed to exist (the central portion in the case of the frame image F3). It is because an inappropriate exposure means nothing to a background hidden by the frame image after the composition. Furthermore, for example, if a figure is combined as the main object and the frame image F3 is selected, it is determined that the image to be combined with the frame image F3 is likely to be an image of a full-length figure. Therefore', a shape and a size of the photometric area are determined so as to achieve an appropriate exposure in the entire body of the figure. On the other hand, if the frame image F2 is selected, it is determined that the image to be combined with it is likely to be an image of a half-length figure. Therefore, a shape and a size of the photometric area are determined so as to achieve an appropriate exposure in the upper body of the figure.
(3) Regarding an amount of exposure adjustment, an exposure is adjusted by the amount enabling an optimum exposure in a range where the main object to be combined with the frame image is supposed to exist (the central portion in the case of the frame image F3). For example, if a figure is combined as the main object and the frame image F3 is selected, it is determined that the image to be combined with it is likely to be an image of a full-length figure. Therefore, an amount of exposure adjustment is determined so as to achieve an appropriate exposure in the entire body of the figure. On the other hand, if the frame image F2 is selected, it is determined that the image to be combined with it is likely to be an image of a half-length figure. Therefore, an amount of exposure adjustment is determined so as to achieve an appropriate exposure in the upper body of the figure. Particularly in photographing a figure, a higher exposure is preferable.
(4) Sensitivity of a camera sensitivity is modified according to an object luminance in a range where the main object to be combined with the frame image is supposed to exist (the central portion in the case of the frame image F3) . If the object luminance is low, the object image is susceptible to image blur caused by a slow shutter speed. If so, it is recommended to increase the camera sensitivity. On the other hand, if the object luminance is high, decreasing the camera sensitivity reduces noise.
(5) An aperture precedence system is adopted. It is because a part of the background around the main object to be combined with the frame image is also combined therewith in many cases and an unfocused background is preferable since it is quiet in a composite image.
(6) A flash light is frequently used. If the luminance of the main object is low when it is to be combined with the frame image, clear skin is achieved by using a flash light frequently, for example, if the object is a figure. Furthermore, preferably a red-eye-reduction function is used at the light emission.
(7) A ranging area is limited to a range where the main object to be combined with the frame image is supposed to exist (the central portion in the case of the frame image F3). It is because unfocusing means nothing to a background hidden by the frame image after the composition. Furthermore, if a figure is combined as the main object and the frame image F3 is selected, it is determined that the image to be combined with the frame image F3 is likely to be an image of a full-length figure. Therefore, a shape and a size of the ranging area are determined so as to achieve an appropriate focus in the entire body of the figure. On the other hand, if the frame image F2 is selected, it is determined that the image to be combined with it is likely to be an image of a half-length figure. Therefore, a shape and a size of the ranging area are determined so as to achieve an appropriate focus in the upper body of the figure.
(8) A focus detection frequency is a frequency suitable for a figure. If a figure is the main object to be combined with a frame image, it is necessary to focus on the figure rapidly and precisely. If the main object is a figure, an outline of a face and positions of eyes, a nose, and a mouth are fixed in general, and therefore a focusing operation can be performed rapidly and precisely by using a focus detection frequency according to them.
(9) Image stabilization is performed. If a figure (particularly a baby) is the main object to be combined with a frame image, it is sometimes hard to take a photo while he or she keeps still. If so, camera shake is prevented by using an image stabilizer function (the lens may be moved in the camera shake direction or a shutter speed may be increased).
(10) A specific scene mode is set. If a figure is the main object to be combined with a frame image, for example, a portrait photographing mode is set as a specific scene mode, thereby achieving more appropriate imaging of the main object existing 2 to 3 meters forward of the camera.
(11) A specific field angle is set. If a figure is the main object to be combined with a frame image, the field angle is appropriately adjusted to the selected frame image so that a full-length or half-length figure is imaged by performing a trimming process.
(12) A magnification of an image is adjusted. If a figure is the main object to be combined with a frame image, the magnification of the image is appropriately adjusted to the selected frame image so that a full-length or half-length figure is imaged by performing optical or electronic zooming.

After determining the imaging conditions as mentioned above, the CPU 11 awaits an input of a depression signal (S1 signal) of the release switch 21a in the first stage in step S112. If the CPU 11 determines that the depression signal (S1 signal) of the release switch 21a in the first stage has been input, it determines the exposure condition by performing the AE process in step S113 and drives the lens unit 1 to the focal position by performing the AF process. It then awaits an input of a depression signal (S2 signal) of the release switch 21a in the second stage in step S114. If the CPU 11 determines that the depression signal (S2 signal) of the release switch 21a in the second stage has been input, it captures the image signal via the CCD 3 under the imaging conditions determined as mentioned above in step S116. It then obtains image information by performing a normal image process in step S117 and stores the image information with being associated with the selected frame image information into the memory card 9 on the basis of the obtained image information in step S118. Thereafter, the flow control returns to step S101. Note that the selected frame image information can be incorporated into a header of the image information.

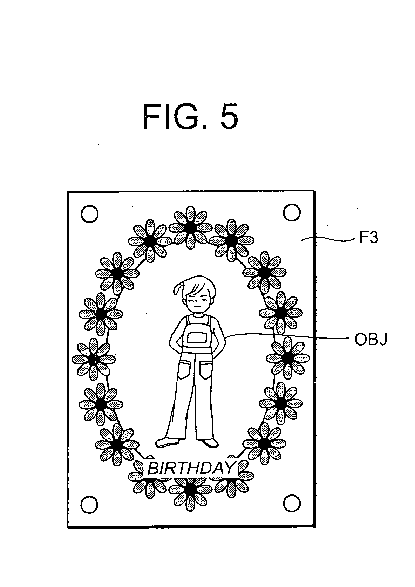

A printer not shown can read the image information and the selected frame image information, which have been associated with each other and stored in the memory card 9, combine it with previously stored image information of the corresponding frame, and print the composite image. Referring to Fig. 5, there is shown a composite image of the frame image F3 and an object OBJ printed by the printer. According to this embodiment, the digital still camera 100 modifies the imaging conditions so as to match the frame image F3 selected by a user before imaging, thereby achieving a higher quality composite image. It is also possible to combine the images in the digital still camera 100.

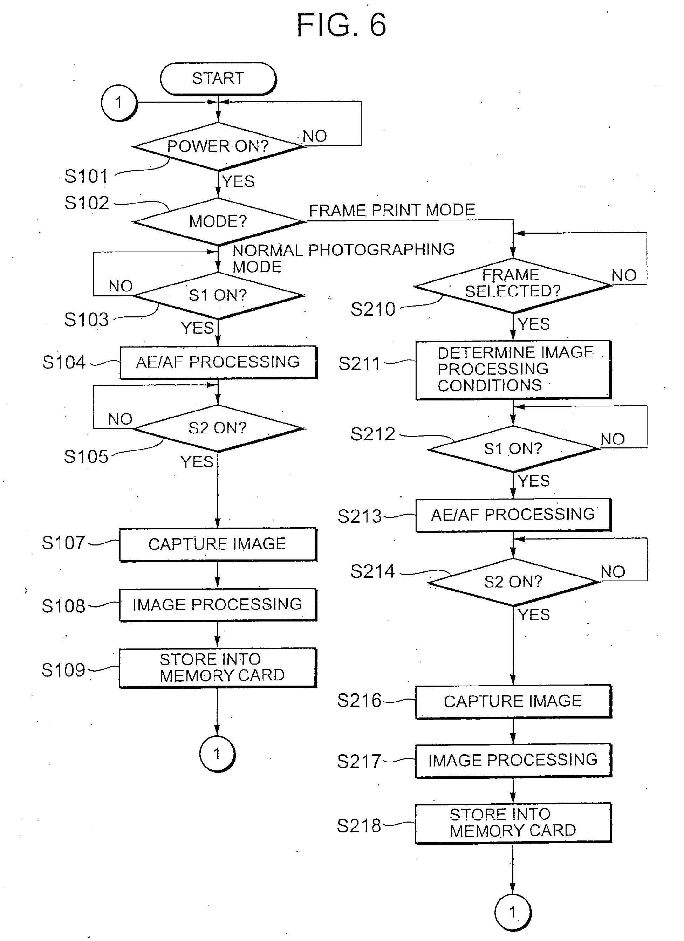

The following describes another embodiment. Referring to Fig. 6, there is shown a flowchart of another control of an operation of the digital still camera 100. In Fig. 6, the processes in steps S101 to S109 are the same as in the embodiment shown in Fig. 3. Therefore, their description is omitted here.

If the CPU 11 determines that the frame print mode is set according to a user's operation of the mode setting button (not shown) among the operation switches 21 in step S102, it performs the above operation and awaits a user's selection of a frame in step S210.

If the user desires to combine the frame image F3 , with an image of an object to be photographed then, his or her depressing the decision button 21d causes the CPU 11 to determine that the frame image F1 has been selected. Thereafter, the CPU 11 determines the image processing conditions on the basis of the selected frame image in step S211. More specifically, the CPU 11 reads information on the frame image F3 stored in the memory card 9 and determines the conditions as described below (modifies default settings of the image processing conditions). Instead of using all of the following conditions, a single condition or combined conditions can be used.
(1) Regarding an amount of exposure adjustment, an exposure is adjusted by the amount enabling an optimum exposure in a range where the main object to be combined with the frame image is supposed to exist (a central portion in the case of the frame image F3). For example, if a figure is combined as the main object and the frame image F3 is selected, it is determined that the image to be combined with the frame image F3 is likely to be an image of a full-length figure. Therefore, an amount of exposure adjustment is determined so as to achieve an appropriate exposure in the entire body of the figure. On the other hand, if the frame image F2 is selected, it is determined that the image to be combined with it is likely to be an image of a half-length figure. Therefore, an amount of exposure adjustment is determined so as to achieve an appropriate exposure in the upper body of the figure. Particularly in photographing a figure, a higher exposure is preferable.
(2) A post photometric area (an exposure area after imaging) is limited to a range where the main object to be combined with the frame image is supposed to exist (the central portion in the case of the frame image F3). It is because an inappropriate exposure means nothing to a background hidden by the frame image after the composition. Furthermore, for example, if a figure is combined as the main object and the frame image F3 is selected, it is determined that the image to be combined with the frame image F3 is likely to be an image of a full-length figure. Therefore, a shape and a size of the photometric area are determined so as to achieve an appropriate exposure in the entire body of the figure. On the other hand, if the frame image F2 is selected, it is determined that the image to be combined with it is likely to be an image of a half-length figure. Therefore, a shape and a size of the photometric area are determined so as to achieve an appropriate exposure in the upper body of the figure.
(3) An amount of post auto white balance (RGB gain) correction is determined so as to achieve an optimum skin color on the assumption that the main object to be combined with the frame image is a figure.
(4) A post auto white balance area is limited to a range where the main object to be combined with the frame image is supposed to exist (the central portion in the case of the frame image F3). It is because a difference from an actual color means nothing to a background hidden by the frame image after the composition. Furthermore, for example, if a figure is combined as the main object and the frame image F3 is selected, it is determined that the image to be combined with the frame image F3 is likely to be an image of a full-length figure. Therefore, a shape and a size of the area are determined so as to achieve an appropriate color appearance in the entire body of the figure. On the other hand, if the frame image F2 is selected, it is determined that the image to be combined with it is likely to be an image of a half-length figure. Therefore, a shape and a size of the area are determined so as to achieve an appropriate color appearance in the upper body of the figure.
(5) An amount of gray level (y curve) correction is determined so as to achieve sharpness of, for example, a hair image on the assumption that the main object.to be combined with the frame image is a figure.
(6) An edge enhancement process is performed by adjusting parameters of the edge enhancement process so as to achieve an optimum edge feeling of skin on the assumption that the main object to be combined with the frame image is a figure.
(7) Regarding a data compression ratio, a low compression ratio is adopted so as to achieve clear skin of a human being on the assumption that the main object to be combined with the frame image is a figure.
(8) A trimming process is performed. It is because a background hidden by a frame image after composition is unnecessary. For example, if a figure is combined as the main object and the frame image F3 is selected, it is determined that the image to be combined with the frame image F3 is likely to be an image of a full-length figure. Therefore, an image area other than the image of the full-length figure is cut off and deleted by the trimming process. On the other hand, if the frame image F2 is selected, it is determined that the image to be combined with it is likely to be an image of a half-length figure. Therefore, an image area other than the image of the half-length figure is cut off and deleted by the trimming process. It can reduce a capacity of the image information to be stored.

After determining the imaging conditions as mentioned above, the CPU 11 awaits an input of a depression signal (S1 signal) of the release switch 21a in the first stage in step S212. If the CPU 11 determines that the depression signal (S1 signal) of the release switch 21a in the first stage has been input, it determines the exposure condition by performing the AE process in step S213 and drives the lens unit 1 to the focal position by performing the AF process. The CPU 11 then awaits an input of a depression signal (S2 signal) of the release switch 21a in the second stage in step S214. If the CPU 11 determines that the depression signal (S2 signal) of the release switch 21a in the second stage has been input, it captures the image signal via the CCD 3 in step S216. The CPU 11 then obtains image information under the imaging conditions determined as mentioned above in step S217 and stores the image information with being associated with the selected frame image information into the memory card 9 on the basis of the obtained image information in step S218. Thereafter, the flow control returns to step S101. According to this embodiment, the digital still camera 100 modifies the imaging conditions so as to match the frame image F3 selected by a user before performing the image data processing for the image information obtained by image pickup, thereby achieving a higher-quality composite image.

While the present invention has been described in connection with certain preferred embodiments, it is to be understood that the subject matter encompassed by the .present invention is not limited to those specific embodiments and that appropriate changes and modifications may be made-in the invention. For example, if the information on the frame image is modified to include information for specifying a color or a pattern of the frame image, or, for example, if the entire frame image is bluish, more balanced printing is achieved by giving a tincture of blue in imaging or image data processing of the object image. The frame image information can be previously stored in the memory 6, which is a storage unit.

According to the present invention, it becomes possible to provide an electronic camera enabling.printing of a higher-quality composite image.

## Claims

1. An electronic camera, comprising:
an imaging unit for converting an optical image to image information;
a storing unit for storing information on a frame image for printing; and
an imaging condition modification unit for modifying imaging conditions in said imaging unit on the basis of the information on the frame image stored in said storing unit.

2. The electronic camera according to claim 1, wherein the modification of the imaging conditions includes at least one of modifications of a photometric condition setting, a photometric area setting, a setting of adjusted exposure amount, a camera sensitivity setting, an exposure condition setting, a change of whether to emit a flash light, a ranging area setting, a focus detection frequency setting, a change of whether to use an image stabilizer, a scene mode setting, a field angle setting, and an image magnification setting.

3. The electronic camera according to claim 1, wherein said storing unit stores information of a plurality of frame images and has a selection unit for selecting the information on the plurality of frame images prior to the imaging..

4. The electronic camera according to claim 3, wherein said storing unit stores the selected information on the frame image in association with the image information obtained by said imaging unit.

5. The electronic camera according to claim 1, further comprising a display for displaying the information on the frame images.

6. An electronic camera, comprising:
an imaging unit for converting an optical image to image information;
a storing unit for storing information on a frame image for printing;
an image processor for performing image processing of image information; and
processing condition modification unit for modifying processing conditions of the image information obtained by the imaging unit on the basis of the information on the frame image stored in said storing unit.

7. The electronic camera according to claim 6, wherein the modification of the processing conditions includes at least one of modifications of a setting of an adjusted exposure amount, a post photometric area setting, a post auto white balance area setting, a post colorimetric area setting, a gray level correction condition setting, an edge enhancement condition setting, and a data compression ratio setting.

8. The electronic camera according to claim 6, wherein said storing unit stores information on a plurality of frame images and has a selecting unit for a selecting the information on the plurality of frame images before the imaging.

9. The electronic camera according to claim 6, wherein said storing unit stores the selected information on the frame image in association with the image information obtained by said imaging unit.

10. The electronic camera according to claim 6, further comprising a display for displaying the information on the plurality of frame images.
